# EUROPEAN PATENT APPLICATION

(11) **EP 4 656 465 A1**
(43) Date of publication of application: **03.12.2025**
(21) Application number: 25163378.0
(22) Date of filing: 13.03.2025
(51) Int. Cl.: B60R 21/206, B60R 21/215

(54) **VEHICLE INSTRUMENT PANEL STRUCTURE**

(30) Priority: 28.05.2024 JP 2024086215
(71) Applicant: Suzuki Motor Corporation, Shizuoka 432-8611 (JP)
(72) Inventor: KAMOHARA, Yoshitaka, HAMAMATSU-SHI, 432-8611 (JP)
(74) Representative: Plasseraud IP

(57) **Abstract**

[Problem to be Solved] To provide a vehicle instrument panel structure that can reduce unintended cracks in the knee airbag cover during airbag deployment.

[Solution] A vehicle instrument panel structure 1 includes an instrument panel 2 on which a column hole 23 is formed, a knee airbag cover 6 that is disposed in the rear side in the vehicle with respect to the knee airbag unit 4 and covers the lower part of the column hole 23, and a column hole cover 7 disposed outside the knee airbag cover 6 in the vehicle width direction. The knee airbag cover 6 has a surrounding wall part 62 that extends frontward in the vehicle from the front side surface opposed to the knee airbag unit 4. A first parting portion **P1** formed between a design surface 6A of the knee airbag cover 6 and a design surface 7A of the column hole cover 7 is located outside in the vehicle width direction relative to a side wall portion 62C on an outer side in the vehicle width direction of the surrounding wall part 62 and extends linearly in the vehicle vertical direction.

## Description

### [Technical Field]

The present invention relates to a vehicle instrument panel structure.

### [Background Art]

Some vehicles, such as automobiles, are equipped with knee airbag units that are deployed below the knees of a passenger seated on a driver's seat and the like. Such a knee airbag unit is attached to, for example, a steering support member disposed in the instrument panel of a vehicle. In the rear side in the vehicle with respect to the knee airbag unit, a knee airbag cover is located. The rear side surface of the knee airbag cover forms a design surface, which faces the interior of the vehicle, with the rear side surface or the like of the instrument panel.

As a conventional vehicle instrument panel structure supporting such a knee airbag unit, for example, Patent Literature 1 discloses a structure in which a knee airbag module corresponding to the knee airbag unit is disposed on the back side of an instrument panel in front of a driver's seat. Above the knee airbag module, a steering column covered with a steering column cover is located diagonally. Furthermore, an airbag door corresponding to the knee airbag cover is attached to the driver's seat side of a package that accommodates an airbag in the knee air bag module, and a switch base is located outside the airbag door in the vehicle width direction.

### [Citation List]

### [Patent Literature]

[Patent Literature 1] JP 2004-098865 A

### [Summary of Invention]

### [Problem to be Solved by the Invention]

Unfortunately, the conventional structure disclosed in Patent Literature 1 is likely to cause unintentional cracks in the knee airbag cover (airbag door) when the knee airbag is deployed. Specifically, on the knee airbag cover, a surrounding wall part is typically formed. The surrounding wall part extends frontward in the vehicle from the front side surface opposed to the knee airbag unit and surrounds the knee airbag unit. The surrounding wall part of the knee airbag cover is also referred to as a chuter that has the function of guiding the inflated and deployed knee airbag rearward in the vehicle.

In the conventional structure, a parting portion extending in the vertical direction of the vehicle is formed between the design surface of the knee airbag cover (airbag door) and the design surface of a member (switch base) located outside of the knee airbag cover in the vehicle width direction, the design surfaces facing the driver's seat. The lower part of the parting portion is shifted outwardly in the vehicle width direction from the side wall portion located on the outer side of the surrounding wall part of the knee airbag cover in the vehicle width direction. Furthermore, the upper part of the parting portion extends upwardly in the vehicle while curving inwardly in the vehicle width direction, and the tip (upper end) of the parting portion reaches the steering column cover. In other words, in the conventional structure, the parting portion formed outside the knee airbag cover in the vehicle width direction extends, in a curved manner, in the vertical direction of the vehicle while crossing the line of upward extension in the vehicle from the side wall portion located on the outer side of the surrounding wall part of the knee airbag cover in the vehicle width direction.

In a case in which the parting portion is formed by a knee airbag cover, when the knee air bag cover is pressed by an inflated and deployed knee airbag and a force directed rearward in the vehicle is applied to the knee airbag cover, cracks are likely to occur around a portion at which the extended lines and the parting portion cross each other on the knee airbag cover. Such cracks of the knee airbag cover are different from phenomena such as intended break of the pre-designed break area of the knee airbag cover to occur during airbag deployment, and thus, there is room for improvement in reducing unintended cracks.

The present invention has been devised in view of the problem. An object of the present invention is to provide a vehicle instrument panel structure that can reduce unintended cracks in a knee airbag cover during airbag deployment.

### [Means for Solving the Problem]

One aspect of the present invention for attaining the object provides a vehicle instrument panel structure including: an instrument panel that is disposed in front of the driver's seat of a vehicle and has a column hole formed to insert a steering column; a knee airbag cover that is disposed in rear side in the vehicle with respect to a knee airbag unit and covers the lower part of the column hole, the knee airbag unit being provided on the lower side in the vehicle with respect to the steering column and allowing an airbag to deploy below the knees of a passenger seated on the driver's seat; and a column hole cover disposed outside the knee airbag cover in the vehicle width direction. The knee airbag cover in the vehicle instrument panel structure has a surrounding wall part that is formed to extend frontward in the vehicle from the front side surface opposed to the knee airbag unit and surround at least the rear end of the knee airbag unit, and a first parting portion is located outside in the vehicle width direction relative to a side wall portion on an outer side in the vehicle width direction of the surrounding wall part and extends linearly in a vehicle vertical direction, the first parting portion being formed between the design surface of the knee airbag cover and the design surface of the column hole cover, the design surfaces facing the driver's seat.

### [Advantageous Effect of Invention]

According to the vehicle instrument panel structure of the present invention, unintended cracks in the knee airbag cover can be reduced during airbag deployment.

### [Brief Description of Drawings]

[Figure 1] Figure 1 is a perspective view of a vehicle instrument panel structure according to an embodiment of the present invention, which is viewed from the rear side in the vehicle diagonally from the left side.
[Figure 2] Figure 2 is an exploded perspective view in which an area around a knee airbag cover, a column hole cover, and a bezel in Figure 1 is enlarged and viewed from the rear side in the vehicle and diagonally from the right side.
[Figure 3] Figure 3 is an enlarged rear view in which an area around first and second parting portions in Figure 2 is viewed from the rear side in the vehicle.
[Figure 4] Figure 4 is a perspective view of the knee airbag cover viewed from the left side in the vehicle and diagonally from the rear side in the embodiment.
[Figure 5] Figure 5 is a perspective view of the knee airbag cover viewed from the front side in the vehicle and diagonally from the left side in the embodiment.
[Figure 6] Figure 6 is a front view illustrating the outer (left) portion of the knee airbag cover in the vehicle width direction viewed from the front side in the vehicle in the embodiment.
[Figure 7] Figure 7 is an enlarged perspective view in which an area around the first and second parting portions is viewed from the rear side in the vehicle and diagonally from the lower side with the column hole cover removed in the embodiment.
[Figure 8] Figure 8 is an enlarged perspective view in which an area around the second parting portion is viewed from the rear side in the vehicle and diagonally from the lower side in a state in which the knee airbag unit and the knee airbag cover are removed in Figure 7.
[Figure 9] Figure 9 is a perspective view illustrating a state in which the bezel is further removed in Figure 8, viewed from the rear side in the vehicle and diagonally from the lower side.
[Figure 10] Figure 10 is an enlarged perspective view in which the fixing point between the outer (left) side of the knee airbag unit in the vehicle width direction and a stay in the embodiment is viewed from the rear side in the vehicle and diagonally from the lower side.

### [Mode for Carrying Out the Invention]

An embodiment according to the present invention will be specifically described below with reference to the accompanying drawings.

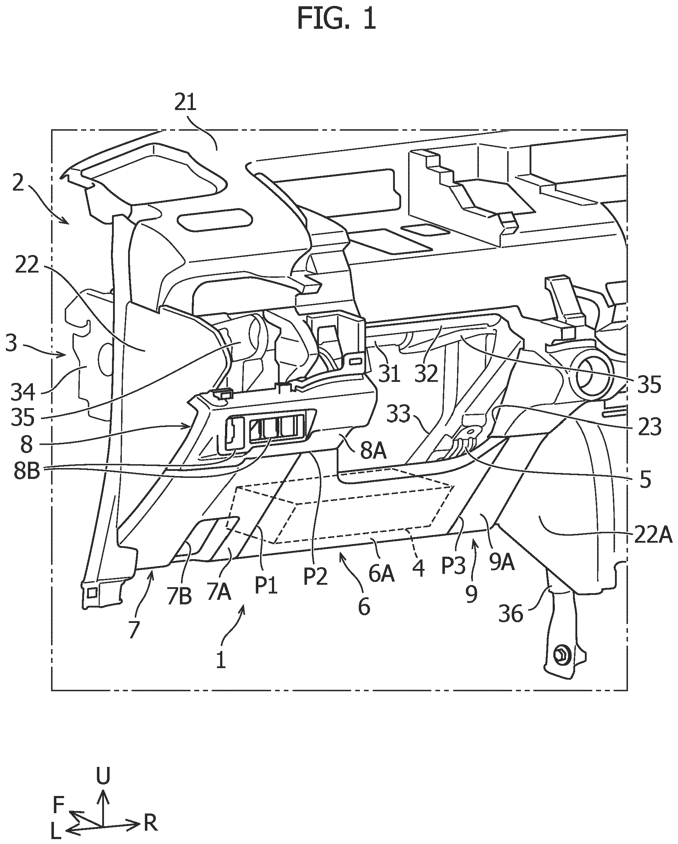

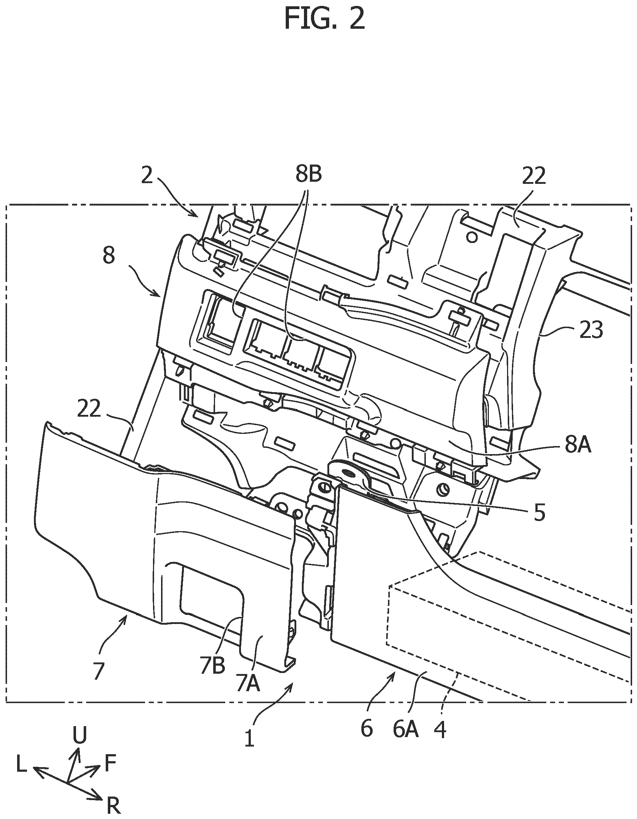

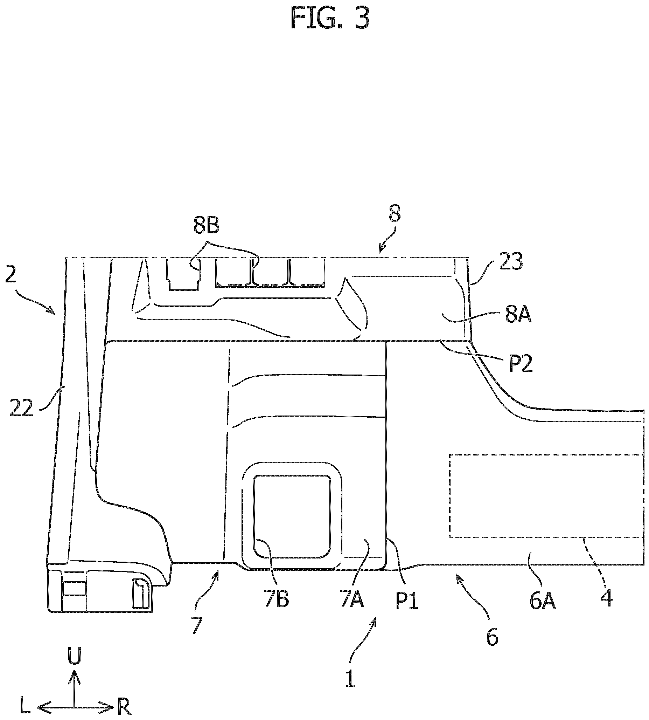

Figure 1 is a perspective view of a vehicle instrument panel structure 1 according to the embodiment of the present invention, which is viewed from the rear side in the vehicle diagonally from the left side. In addition, Figure 2 is an exploded perspective view in which an area around a knee airbag cover 6, a column hole cover 7, and a bezel 8 in Figure 1 is enlarged and viewed from the rear side in the vehicle and diagonally from the right side. Furthermore, Figure 3 is an enlarged rear view in which an area around first and second parting portions P1 and P2 in Figure 2 is viewed from the rear side in the vehicle. **In** the drawings described below, an arrow F direction indicates a forward direction in in a vehicle front-rear direction, an arrow U direction indicates an upward direction in the vertical direction of the vehicle, and an arrow R direction and an arrow L direction indicate a rightward direction and a leftward direction in a view ahead of the vehicle from the interior.

For example, the vehicle instrument panel structure 1 according to the present embodiment is applied to a part located in front of the driver's seat in an instrument panel 2 provided in the front of a vehicle such as an automobile. The instrument panel 2 is formed using a resin material or the like and includes an upper panel 21 facing upwardly in the vehicle and a lower panel 22 facing the driver's seat rearward in the vehicle as shown in Figure 1. Inside the instrument panel 2, specifically in a vehicle outer space located below the upper panel 21 and in front of the lower panel 22, a steering support member 3 extending in the vehicle width direction is disposed. In a part located in the instrument panel 2 and near the driver's seat, a column hole 23 for insertion of a steering column (not illustrated) is formed (Figures 1 to 3). A knee airbag unit 4 (dashed line) to be attached to the steering support member 3 is placed on the lower front side of the column hole 23.

The steering support member 3 is a metallic vehicle body component having high rigidity. The steering support member 3 includes a first pipe 31 that extends in the vehicle width direction, a second pipe 32 that is spaced apart from the first pipe 31 on the rear side in the vehicle and extends in the vehicle width direction, and knee airbag stays 33 that extend downwardly in the vehicle from the first and second pipes 31 and 32 (Figure 1). In the present embodiment, the two knee airbag stays 33 spaced in the vehicle width direction are provided at positions corresponding to the column hole 23 of the instrument panel 2. The spacing between the left and right knee airbag stays 33 is designed according to the length (overall width) of the knee airbag unit 4 in the vehicle width direction. In Figure 1, only the right knee airbag stay 33 is viewed through the column hole 23.

The first pipe 31 extends in the vehicle width direction at a position below the upper panel 21 and in front of the lower panel 22 in the instrument panel 2. Both ends of the first pipe 31 in the longitudinal direction (vehicle width direction) are fixed to a dashboard side panel (not illustrated), which constitutes one side of the vehicle body, with side brackets 34. The second pipe 32 is located between the first pipe 31 and the instrument panel 2 when viewed in the vehicle width direction, and is arranged to overlap the upper edge portion of the column hole 23 in the instrument panel 2 when viewed in the vehicle front-rear direction. The length of the second pipe 32 in the vehicle width direction is designed to roughly correspond to the length of the column hole 23 in the vehicle width direction. Both ends of the second pipe 32 in the vehicle width direction are connected to the left portion of the first pipe 31 via a pair of connecting members 35, respectively. The left portion of the first pipe 31 is located in front of the driver's seat.

Between the pair of connecting members 35, a steering column bracket (not illustrated) that connects the steering column of the vehicle is provided to connect the first and second pipes 31 and 32, and a front member (not illustrated) is provided to extend frontward in the vehicle from the first and second pipes 31 and 32 and connect to the dashboard panel of the vehicle. In addition, a lower member 36 extending in the vertical direction of the vehicle is connected to the connecting member 35 on the inner side (right side) in the vehicle width direction (Figure 1). The lower end of the lower member 36 is fastened to a vehicle body component (not shown) near the floor panel with bolts or the like.

As described above, both ends of the first pipe 31 of the steering support member 3 in the vehicle width direction are supported by a dashboard side panel on one side of the vehicle body via the side brackets 34, and the middle part of the first pipe 31 in the vehicle width direction is supported by the dashboard panel via the front member and is supported by the vehicle body component near the floor panel via the connecting member 35 and the lower member 36.

Moreover, in addition to the left and right knee airbag stays 33, the steering support member 3 includes a plurality of panel stays (not illustrated) for supporting the instrument panel 2 (the upper panel 21 and the lower panel 22), the panel stays being fixed to the first and second pipes 31 and 32 by welding or the like. Each of the panel stays extends from the first pipe 31 or the second pipe 32 toward one side (the upper side in the vehicle or the rear side in the vehicle) on which the instrument panel 2 is installed, and the panel stays are distributed in the vehicle width direction.

The knee airbag unit 4 is configured such that an air bag can be deployed below the knees of a passenger seated on the driver's seat. The knee airbag unit 4 according to the present embodiment includes a main body case shaped like a horizontally elongated box. A folded airbag and an inflator for supplying inflation gas into the airbag are stored in the main body case. On both side surfaces of the main body case in the vehicle width direction, left and right metallic knee airbag brackets 5 in a pair (Figures 1 and 2) are fixed, respectively.

The knee airbag bracket 5 extends frontward in the vehicle and diagonally upward from one side surface of the knee airbag unit 4 in the vehicle width direction, and a flange protruding in the vehicle width direction is formed on the distal end (front end) of the knee airbag bracket 5. The flange of the knee airbag bracket 5 extends diagonally rearward in the vehicle along the lower part of the knee airbag stay 33 as the flange extends to the upper side in the vehicle, and is fixed to the knee airbag stay 33 using bolts or the like. The shape of the knee airbag bracket 5 and a fixing structure to the knee airbag stay 33 will be specifically described later. Furthermore, on the rear side surface of the main body case, an opening is formed for deploying the airbag out of the case after gas is supplied into the airbag from the inflator. The opening of the main body case is covered with the knee airbag cover 6 made of a resin material or the like.

The knee airbag cover 6 is fixed to the instrument panel 2 (lower panel 22) to cover the opening of the knee airbag unit 4 from the rear side in the vehicle, the knee airbag unit 4 being fixed to the knee airbag stays 33 with the knee airbag brackets 5 (Figures 1 to 3). The knee airbag cover 6 is located in the lower part of the column hole 23 formed in the instrument panel 2 and is roughly rectangular shape that is long in the vehicle width direction when viewed from the rear side in the vehicle. **In** the present embodiment, the upper part of the knee airbag cover 6 has a central part in the vehicle width direction such that the central part is recessed downward in the vehicle according to the shape of a steering column cover (not illustrated) that is inserted into the column hole 23. The rear side surface of the knee airbag cover 6, facing the interior of the vehicle forms a part of the design surface of an interior material disposed in front of the driver's seat. Specifically, the knee airbag cover 6 has a design surface 6A facing the driver's seat. The column hole cover 7, the bezel 8, and an inside cover 9 that are made of a resin material or the like are arranged next to one another around the knee airbag cover 6 (Figure 1). The details of the knee airbag cover 6 will also be described later.

The column hole cover 7 is disposed outside the knee airbag cover 6 in the vehicle width direction. The column hole cover 7 has a roughly rectangular shape when viewed from the rear side in the vehicle, and the outer end of the column hole cover 7 in the vehicle width direction is located near the outer end of the instrument panel 2 (lower panel 22) in the vehicle width direction. The inner side of the column hole cover 7 in the vehicle width direction is overlaid from the rear side in the vehicle with an upper leg portion 67A and a lower leg portion 68A, which will be described later, formed outside the knee airbag cover 6 in the vehicle width direction (Figure 2). The upper leg portion 67A and the lower leg portion 68A will be described later. The rear side surface of the column hole cover 7, facing the interior of the vehicle forms a part of the design surface of the interior material disposed in front of the driver's seat. Specifically, the column hole cover 7 has a design surface 7A facing the driver's seat. Between the design surface 6A of the knee airbag cover 6 and the design surface 7A of the column hole cover 7, a first parting portion P1 extending linearly in the vehicle vertical direction is formed (Figures 1 and 3). In the central lower part of column hole cover 7 in the vehicle width direction, a switch opening 7B penetrating in the vehicle front-rear direction is formed, and various operation switches (not illustrated) are disposed in the switch opening 7B.

The bezel 8 is disposed in the upper side of the outer part in the vehicle width direction of the knee airbag cover 6 and on the upper side in the vehicle with respect to the column hole cover 7 (Figures 1 to 3). The bezel 8 has a roughly rectangular shape extending in the vehicle width direction when viewed from the rear side in the vehicle. The inner end of the bezel 8 in the vehicle width direction is adjacent to the outer end of the column hole 23 in the vehicle width direction, the column hole 23 being formed on the instrument panel 2. The outer end of the bezel 8 in the vehicle width direction is located near the outer end of the instrument panel 2 (lower panel 22) in the vehicle width direction. The rear side surface of the bezel 8, facing the interior of the vehicle forms a part of the design surface of the interior material disposed in front of the driver's seat. Specifically, the bezel 8 has a design surface 8A facing the driver's seat. Between the design surfaces 6A and 7A of the knee airbag cover 6 and the column hole cover 7 and the design surface 8A of the bezel 8, a second parting portion P2 extending linearly in the vehicle width direction is formed (Figures 1 and 3). In the central left part of the bezel 8 in the vehicle width direction, a plurality of switch openings 8B penetrating in the vehicle front-rear direction are formed, and various operation switches (not illustrated) are disposed in the respective switch openings 8B.

The inside cover 9 is arranged inside the knee airbag cover 6 in the vehicle width direction (Figure 1). The inside cover 9 has a roughly rectangular shape that extends in the vehicle vertical direction when viewed from the rear side in the vehicle. The inner end of the inside cover 9 in the vehicle width direction is located near a lower side surface 22A of a center cluster disposed at the center of the instrument panel 2 (lower panel 22) in the vehicle width direction. The rear side surface of the inside cover 9, facing the interior of the vehicle forms a part of the design surface of the interior material disposed in front of the driver's seat. Specifically, the inside cover 9 has a design surface 9A facing the driver's seat. Between the design surface of the knee airbag cover 6 and the design surface of the inside cover 9, a third parting portion P3 extending linearly in the vehicle vertical direction is formed.

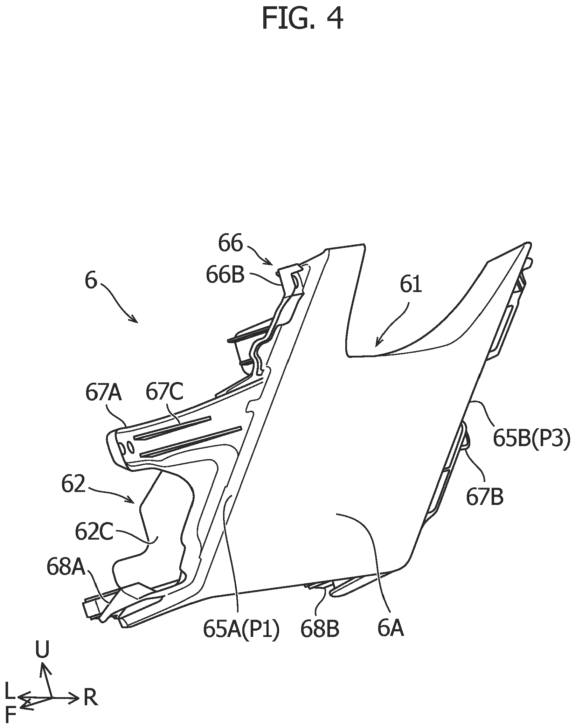

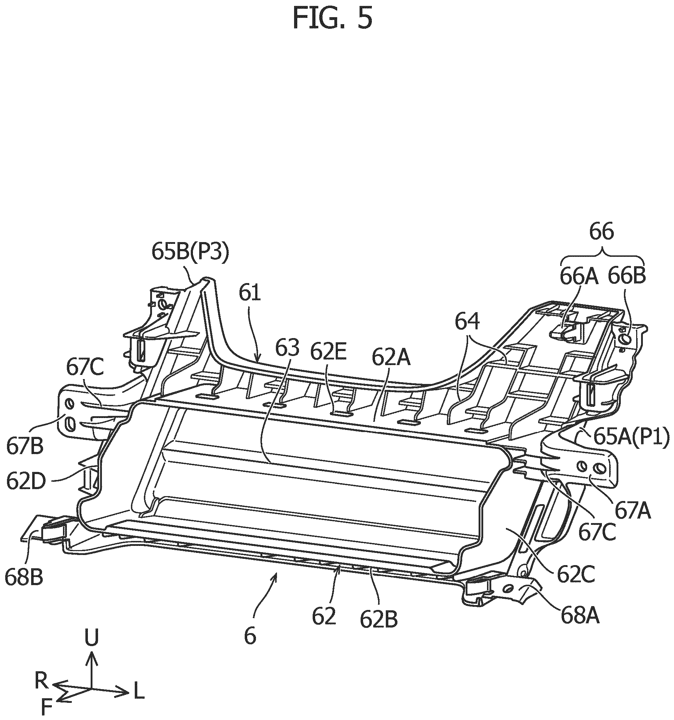

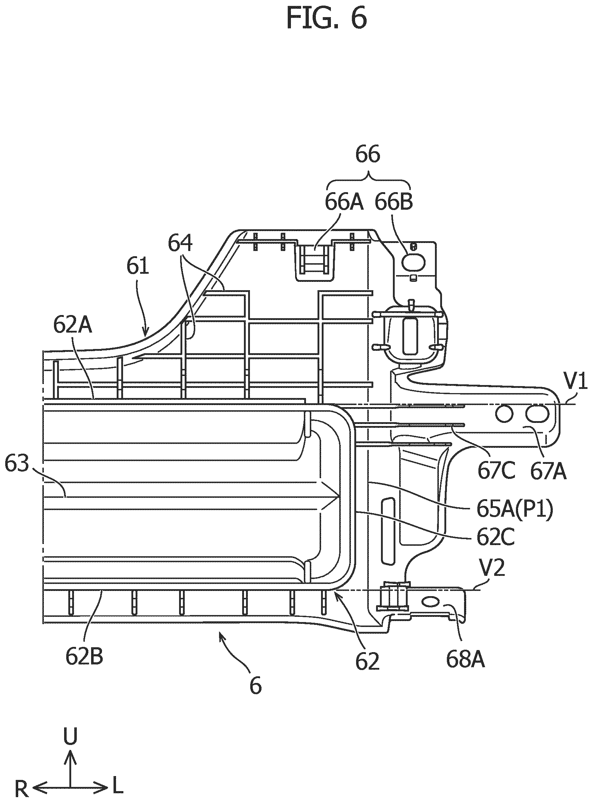

Referring to Figures 4 to 6, a specific structure of the knee airbag cover 6 according to the present embodiment will be described in detail. Figure 4 is a perspective view of the knee airbag cover 6 viewed from the left side in the vehicle and diagonally from the rear side. Figure 5 is a perspective view of the knee airbag cover 6 viewed from the front side in the vehicle and diagonally from the left side. Furthermore, Figure 6 is a front view illustrating the outer (left) portion of the knee airbag cover 6 in the vehicle width direction from the front side in the vehicle.

As shown in Figures 4 to 6, the knee airbag cover 6 in the present embodiment has a lid part 61 that is disposed in the rear side in the vehicle with respect to the knee airbag unit 4 fixed to the knee airbag stay 33. The lid part 61 is formed like a plate diagonally extending upwardly toward the rear side in the vehicle and extending in the vehicle width direction. The rear side surface of the lid part 61 forms the flat design surface 6A of the knee airbag cover 6 (Figure 4). Furthermore, the front side surface of the lid part 61 is opposed to the opening formed on the rear end face of the knee airbag unit 4. In a part corresponding to the opening on the front side surface of the lid part 61, a surrounding wall part 62 (chuter) and a weak breaking part 63 are formed (Figures 5 and 6).

The surrounding wall part 62 extends from the front side surface of the lid part 61, frontward in the vehicle and is formed around at least the rear end of the knee airbag unit 4. The surrounding wall part 62 includes an upper wall portion 62A located above the knee airbag unit 4, a lower wall portion 62B located below the knee airbag unit 4, and side wall portions 62C and 62D that connect both ends of the upper wall portion 62A and the lower wall portion 62B in the vehicle width direction.

The length of extension from the front side surface of the lid part 61 on the upper wall portion 62A is almost equal to the length of extension from the front side surface of the lid part 61 on the lower wall portion 62B. In other words, the surrounding wall part 62 is formed such that the front edge of the lower wall portion 62B is located in the front side in the vehicle with respect to the front edge of the upper wall portion 62A according to the inclination angle of the front side surface of the lid part 61. On the upper wall portion 62A, a plurality of engagement holes 62E penetrating in the vertical direction are formed at certain spacings in the vehicle width direction (Figure 5). A plurality of engaging claws (not illustrated) provided on the upper rear side of the knee airbag unit 4 can be engaged with the engagement holes 62E. The side wall portion 62C on the outer side (left side) in the vehicle width direction and the side wall portion 62D on the inner side (right side) in the vehicle width direction have almost similar shapes in the side view in the vehicle. The front edges of the side wall portions 62C and 62D have uneven portions in the front-rear direction of the vehicle while avoiding interference with the left and right knee airbag brackets 5 and the like to be fixed to the main body case of the knee airbag unit 4.

The weak breaking part 63 is formed in a portion located inside the surrounding wall part 62 on the front side surface of the lid part 61 and extends straight in the vehicle width direction (Figures 5 and 6). The weak breaking part 63 is configured to break when the lid part 61 is pressed by the deployed airbag during the deployment of the knee airbag unit 4. In a portion located outside the surrounding wall part 62 on the front side surface of the lid part 61, a plurality of ribs 64 that protrude frontward in the vehicle and extend in the vehicle width direction are formed, thereby increasing the surface strength of the portion. In other words, the lid part 61 has a fragile structure in a portion located inside the surrounding wall part 62 as compared with a portion outside the surrounding wall part 62.

The knee airbag cover 6 has an outer wall portion 65A that protrudes frontward in the vehicle from the outer edge of the design surface 6A (the rear side surface of the lid part 61) in the vehicle width direction and extends along the outer edge, and an inner wall portion 65B that protrudes frontward in the vehicle from the inner edge of the design surface 6A in the vehicle width direction and extends along the inner edge (Figures 4 to 6). The outer wall portion 65A forms the inner wall surface of the first parting portion P1 extending straight in the vertical direction with respect to the design surface 7A of the column hole cover 7. The inner wall portion 65B forms the inner wall surface of the third parting portion P3 extending straight in the vertical direction with respect to the design surface 9A of the inside cover 9.

A bezel engaging portion 66 to be engaged with the bezel 8 is provided around the upper end portion of the outer wall portion 65A. The bezel engaging portion 66 in the present embodiment has an engaging claw 66A that protrudes frontward in the vehicle from the upper end portion of the outer front side surface of the lid part 61 in the vehicle width direction, and a positioning hole 66B that protrudes outwardly in the vehicle width direction from the upper end portion of the outer wall portion 65A and penetrates in the front-rear direction. The engaging claw 66A is inserted into an engagement hole 84A of the bezel 8. The engagement hole 84A will be described later. A protrusion 84B of the bezel 8 is inserted into the positioning hole 66B. The protrusion 84B will be described later.

In the central portion of the outer wall portion 65A in the vehicle vertical direction, the upper leg portion 67A is provided. The upper leg portion 67A extends frontward in the vehicle and extends while curving outwardly (to the left) in the vehicle width direction. The lower end portion of the outer wall portion 65A has a lower leg portion 68A that extends outwardly (to the left) in the vehicle width direction. In other words, the upper leg portion 67A and lower leg portion 68A, which extend outwardly from the outer wall portion 65A in the vehicle width direction, are spaced in the vehicle vertical direction.

In the central portion of the inner wall portion 65B in the vehicle vertical direction, an upper leg portion 67B is provided. The upper leg portion 67B extends frontward in the vehicle and extends while curving inwardly (to the right) in the vehicle width direction. The lower end portion of the inner wall portion 65B has a lower leg portion 68B that extends inwardly (to the right) in the vehicle width direction. In other words, the upper leg portion 67B and lower leg portion 68B, which extend inwardly from the inner wall portion 65B in the vehicle width direction, are spaced in the vehicle vertical direction.

As illustrated in Figures 5 and 6, the upper leg portions 67A and 67B on the left and right are arranged to overlap on a virtual plane V1 (a chain double-dashed line in Figure 6) extending in the vehicle width direction from the upper surface of the upper wall portion 62A of the surrounding wall part 62 in front view. Furthermore, the lower leg portions 68A and 68B on the left and right are arranged to overlap on a virtual plane V2 (a chain double-dashed line in Figure 6) extending in the vehicle width direction from the undersurface of the lower wall portion 62B of the surrounding wall part 62 in front view.

The upper leg portions 67A and 67B and the lower leg portions 68A and 68B are fixed to fixing portions (not illustrated) provided for the respective leg portions on the rear surface of the instrument panel 2 (lower panel 22). In the curved portions of the upper leg portions 67A and 67B according to the present embodiment, a plurality of ribs 67C are formed at certain spacings in the vertical direction, thereby increasing the strength of the upper leg portions 67A and 67B (Figures 4 to 6).

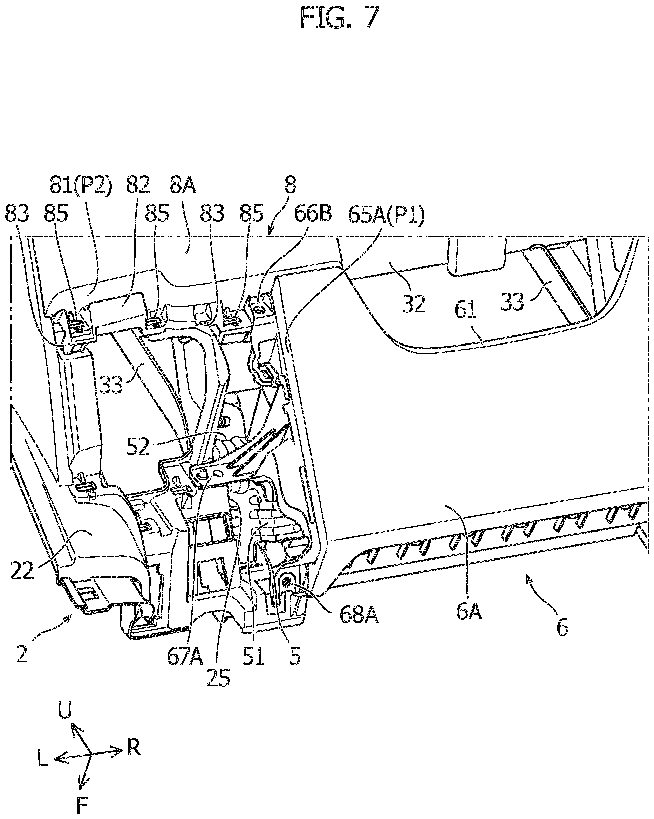

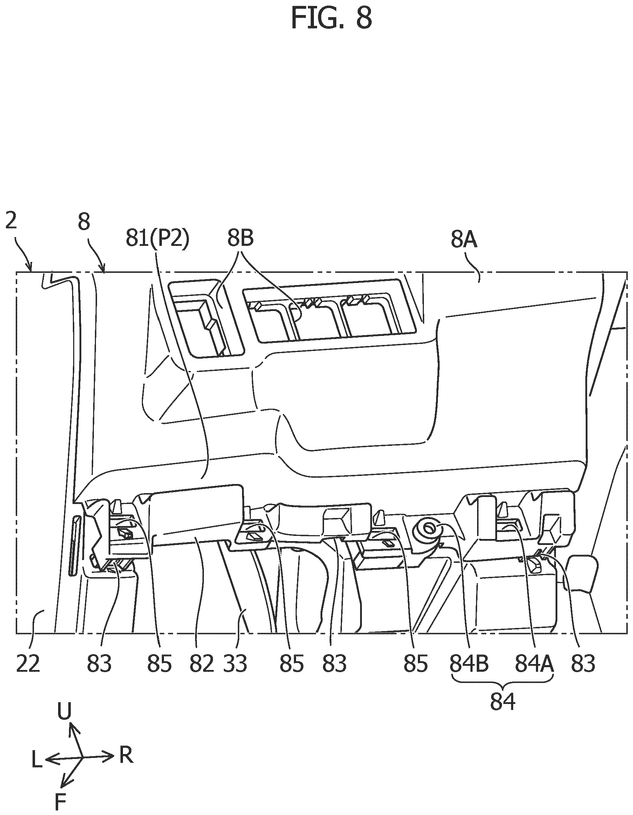

Referring to Figures 7 and 8, a specific structure of the bezel 8 according to the present embodiment will be described in detail.

Figure 7 is an enlarged perspective view in which an area around the first and second parting portions P1 and P2 is viewed from the rear side in the vehicle and diagonally from the lower side with the column hole cover 7 removed in the vehicle instrument panel structure 1 according to the present embodiment. Furthermore, Figure 8 is an enlarged perspective view in which an area around the second parting portion P2 is viewed from the rear side in the vehicle and diagonally from the lower side in a state in which the knee airbag unit 4 and the knee airbag cover 6 are removed in Figure 7.

As shown in Figures 7 and 8, the bezel 8 in the present embodiment protrudes frontward in the vehicle from the lower edge of the design surface 8A and includes a lower wall portion 81 that extends along the lower edge and a flange portion 82 that protrudes downwardly in the vehicle from the front edge of the lower wall portion 81 and extends in the vehicle width direction along the rear surface of the instrument panel 2. The lower wall portion 81 forms the inner wall surface of the second parting portion P2 that extends straight in the vehicle width direction between the design surface 6A of the knee airbag cover 6 and the design surface 7A of the column hole cover 7. Formed on the flange portion 82 are panel engaging portions 83 that are engaged with the instrument panel 2 (lower panel 22), a knee-airbag-cover engaged portion 84 that engages with the knee airbag cover 6, and column-hole-cover engaged portions 85 that engage with the column hole cover 7.

Specifically, in the present embodiment, the panel engaging portions 83 of the bezel 8 have three engaging claws to be inserted into respective bezel engaged portions 24, which will be described later, on the rear surface of the lower panel 22 (Figures 7 and 8). The engaging claws of the panel engaging portions 83 are spaced on both ends and the middle portion of the flange portion 82 in the longitudinal direction (vehicle width direction), one of the engaging claws is located on the inner side in the vehicle width direction and overlaps on the upper end of the knee airbag cover 6, and the other two engaging claws are located to overlap on the upper end of the column hole cover 7.

Specifically, the knee-airbag-cover engaged portion 84 of the bezel 8 has the engagement hole 84A and the protrusion 84B (Figure 8). The engaging claw 66A of the knee airbag cover 6 (Figures 5 and 6) is inserted into the engagement hole 84A. The protrusion 84B is inserted into the positioning hole 66B of the knee airbag cover 6.

The column-hole-cover engaged portions 85 of the bezel 8 have three engagement holes that are spaced in the longitudinal direction (vehicle width direction) of the flange portion 82 (Figures 7 and 8). The engagement holes of the column-hole-cover engaged portions 85 are located to overlap on the upper end of the column hole cover 7. Three engaging claws (not illustrated) provided on the column hole cover 7 are inserted into the respective engagement holes.

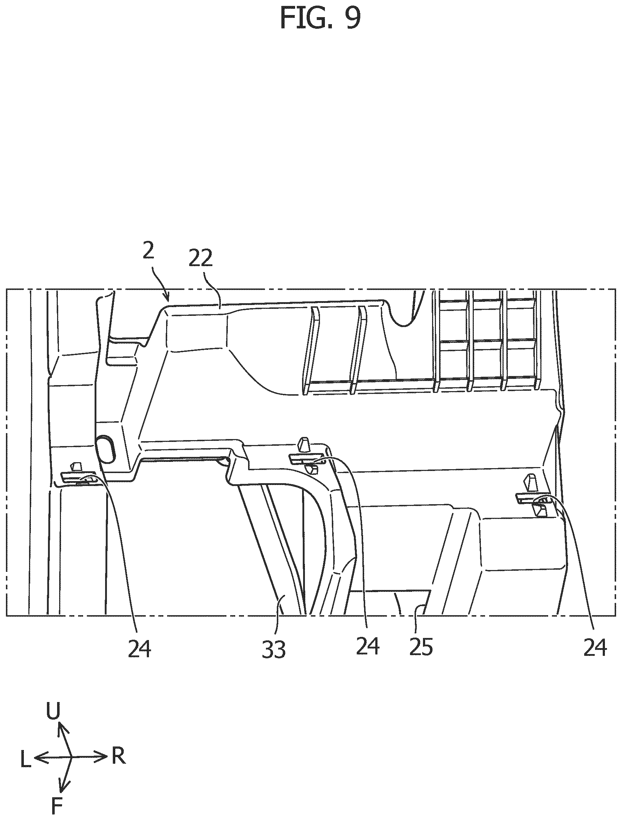

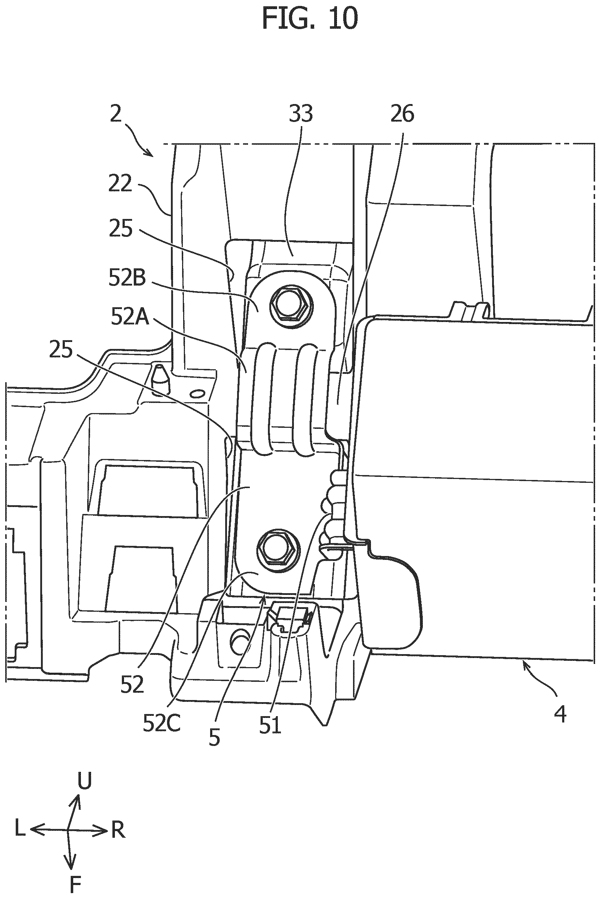

Referring to Figures 9 and 10, a specific structure of the lower panel 22 of the instrument panel 2 according to the present embodiment will be described in detail.

Figure 9 is a perspective view illustrating a state in which the bezel 8 is further removed in Figure 8, viewed from the rear side in the vehicle and diagonally from the lower side. Furthermore, Figure 10 is an enlarged perspective view in which the fixing point between the outer (left) side of the knee airbag unit 4 in the vehicle width direction and the knee airbag stay 33 according to the present embodiment is viewed from the rear side in the vehicle and diagonally from the lower side.

As shown in Figures 7 to 10, the lower panel 22 of the instrument panel 2 includes the bezel engaged portions 24 provided in a portion corresponding to the flange portion 82 of the bezel 8 on the rear surface facing the driver's seat. The bezel engaged portions 24 of the lower panel 22 in the present embodiment have three engagement holes spaced in the vehicle width direction. The engaging claws of the panel engaging portions 83 formed on the flange portion 82 of the bezel 8 are inserted into the respective engagement holes of the bezel engaged portions 24.

Furthermore, an opening 25 is formed on the rear surface of the lower panel 22 such that the knee airbag bracket 5 is inserted through the opening 25 to fix the knee airbag unit 4 to the knee airbag stay 33 on the outer side (left side) of the steering support member 3 in the vehicle width direction (Figures 7, 9, and 10). The opening 25 is disposed between the left knee airbag stay 33 and the knee airbag cover 6 and is formed in a roughly rectangular shape extending in the vehicle vertical direction. A bridging portion 26 spanning in the vehicle width direction is provided in the middle portion of the opening 25 in the vehicle vertical direction (Figure 10). The bridging portion 26 is fixed to the knee airbag stay 33.

For the opening 25 and the bridging portion 26 of the instrument panel 2 (lower panel 22) configured thus, an extending portion 51 and a flange 52 are formed on the knee airbag bracket 5 (Figures 7 and 10). The extending portion 51 extends frontward in the vehicle and diagonally upward from one side surface of the main body case of the knee airbag unit 4 in the vehicle width direction. The flange 52 protrudes outwardly in the vehicle width direction from the tip (front end) of the extending portion 51 and extends along the lower part of the knee airbag stay 33. In the middle portion of the flange 52 in the longitudinal direction (vehicle vertical direction), a curved portion 52A is formed toward the rear side in the vehicle (Figure 10). An upper portion 52B and a lower portion 52C of the flange 52 are fixed to the knee airbag stay 33 with bolts or the like such that the curved portion 52A spans the bridging portion 26 of the instrument panel 2 (lower panel 22) in the vehicle vertical direction. In the present embodiment, the extending portion 51 and the curved portion 52A of the knee airbag bracket 5 are subjected to beading, thereby increasing the strength of the knee airbag bracket 5.

The following will describe the assembly process of the knee airbag unit 4 and the surrounding members in the vehicle instrument panel structure 1 according to the present embodiment.

In the vehicle instrument panel structure 1 described above, when the knee airbag unit 4 and the surrounding members are assembled in predetermined positions, the upper panel 21 and the lower panel 22 of the instrument panel 2 are first fixed to the panel stays of the steering support member 3. At this point, the bridging portion 26 of the lower panel 22 is also fixed to the knee airbag stay 33 of the steering support member 3.

When the instrument panel 2 is fixed to the steering support member 3, the knee airbag unit 4 is fixed to the knee airbag stays 33 of the steering support member 3 by using the knee airbag brackets 5. At this point, the upper portion 52B and the lower portion 52C of the flange 52 are fixed to the knee airbag stay 33 such that the curved portion 52A of the flange 52 in the knee airbag bracket 5 spans the bridging portion 26 of the lower panel 22.

When the knee airbag unit 4 is fixed to the knee airbag stays 33, the engaging claws of the panel engaging portions 83 provided on the flange portion 82 of the bezel 8 are inserted into the engagement holes of the bezel engaged portions 24 provided on the rear surface of the lower panel 22. Thus, the bezel 8 is fixed to a predetermined position on the rear surface of the lower panel 22.

When the bezel 8 is fixed to the lower panel 22, the knee airbag cover 6 is fixed to the bezel 8 and the lower panel 22 of the instrument panel 2. At this point, the engaging claw 66A and the positioning hole 66B of the bezel engaging portion 66 provided on the knee airbag cover 6 are inserted into the engagement hole 84A and the protrusion 84B of the knee-airbag-cover engaged portion 84 provided on the flange portion 82 of the bezel 8. The upper leg portions 67A and 67B and the lower leg portions 68A and 68B that are provided on the knee airbag cover 6 are fixed to the respective fixing portions provided on the rear surface of the lower panel 22. Thus, an opening on the rear end face of the knee airbag unit 4 is covered with the lid part 61 of the knee airbag cover 6, and at least the rear end of the knee airbag unit 4 is surrounded by the surrounding wall part 62 of the knee airbag cover 6.

When the knee airbag cover 6 is fixed to the bezel 8 and the lower panel 22, the column hole cover 7 is fixed to the bezel 8 and the lower panel 22 of the instrument panel 2, and the inside cover 9 is fixed to the lower panel 22 of the instrument panel 2. At this point, the engaging claws provided on the column hole cover 7 are inserted into the engagement holes of the column-hole-cover engaged portions 85 provided on the flange portion 82 of the bezel 8. By fixing the column hole cover 7, the first parting portion P1 extending linearly in the vehicle vertical direction is formed between the design surface 6A of the knee airbag cover 6 and the design surface 7A of the column hole cover 7, and the second parting portion P2 extending linearly in the vehicle width direction is formed between the design surfaces 6A and 7A of the knee airbag cover 6 and the column hole cover 7 and the design surface 8A of the bezel 8. Furthermore, by fixing the inside cover 9, the third parting portion P3 extending linearly in the vehicle vertical direction is formed between the design surface 6A of the knee airbag cover 6 and the design surface 9A of the inside cover 9.

When an impact at a predetermined level or higher is applied to the knee airbag unit 4 in a state in which the knee airbag unit 4 and the surrounding members are assembled as described above, the knee airbag unit 4 allows instant gas supply from the inflator to the airbag and inflates the airbag below the knees of a passenger seated on the driver's seat while rupturing the weak breaking part 63 of the knee airbag cover 6, thereby protecting parts under the knees of the passenger.

At this point, a reaction force directed frontward in the vehicle is applied to the knee airbag unit 4 when the airbag is deployed. The reaction force is transmitted to the left and right knee airbag stays 33 via the knee airbag brackets 5 connected to the knee airbag unit 4 and is transmitted to the first and second pipes 31 and 32. The first and second pipes 31 and 32 are connected via the pair of connecting members 35 and are supported on each part of the vehicle body via the left and right side brackets 34, the front member, and the lower member 36. Thus, the reaction force during the deployment of the airbag is securely received by each part of the steering support member 3.

Furthermore, upon the deployment of the airbag, the knee airbag cover 6 is pressed by the inflating airbag to move rearward in the vehicle. However, the knee airbag cover 6 is fixed to the bezel 8 and the instrument panel 2 (lower panel 22) by the bezel engaging portion 66, the upper leg portions 67A and 67B, and the lower leg portions 68A and 68B, and the engaging claws provided for the knee airbag unit 4 are engaged with the engagement holes 62E formed on the surrounding wall part 62 of the knee airbag cover 6, thereby preventing the knee airbag cover 6 from moving rearward in the vehicle. When the airbag inflates continuously, the weak breaking part 63 formed on the knee airbag cover 6 breaks to deploy the airbag below the knees of the passenger.

As described above, in the vehicle instrument panel structure 1 according to the present embodiment, the first parting portion **P1** formed between the design surface 6A of the knee airbag cover 6 and the design surface 7A of the column hole cover 7 is located outside the side wall portion 62C in the vehicle width direction on the outer side of the surrounding wall part 62 of the knee airbag cover 6 in the vehicle width direction and extends linearly in the vehicle vertical direction (Figure 6 and other drawings). According to this structure, unlike in the conventional structure, the occurrence of cracks in unintended portions on the knee airbag cover can be reduced during the deployment of the knee airbag while hiding the knee airbag unit 4 with the knee airbag cover 6.

Furthermore, in the vehicle instrument panel structure 1 according to the present embodiment, the bezel 8 is disposed in the upper side in the vehicle with respect to the knee airbag cover 6 and the column hole cover 7, the second parting portion P2 is formed between the design surface 8A of the bezel 8 and the design surfaces 6A and 7A of the knee airbag cover 6 and the column hole cover 7, and the upper end of the first parting portion P1 reaches the second parting portion P2. According to this structure, a structure can be implemented such that the members can withstand a load (force directed rearward in the vehicle) applied to the members during the deployment of the knee airbag while maintaining the performance including the clearance accuracy and the appearance of the first and second parting portions P1 and P2 among the knee airbag cover 6, the column hole cover 7, and the bezel 8. Furthermore, the panel engaging portions 83 formed at least on both ends of the flange portion 82 in the bezel 8 in the vehicle width direction are engaged with the rear surface of the instrument panel 2 (lower panel 22). In addition, the bezel engaging portion 66 formed near the upper end portion of the outer wall portion 65A of the knee airbag cover 6 is engaged with the bezel 8, and the bezel engaging portion 66 is disposed in the front side in the vehicle with respect to the column hole cover 7. According to this structure, during the deployment of the knee airbag, the members such as the knee airbag cover 6, the column hole cover 7, and the bezel 8 can be securely located at predetermined positions against a load applied to the members, and deterioration in the performance of the first and second parting portions P1 and P2 can be reduced.

Furthermore, in the vehicle instrument panel structure 1 according to the present embodiment, the engagement holes 62E that can be engaged with the engaging claws provided for the knee airbag unit 4 are formed in the surrounding wall part 62 of the knee airbag cover 6. In addition, the upper leg portion 67A of the knee airbag cover 6 is arranged to overlap on the virtual plane V1 extending in the vehicle width direction from the top surface of the upper wall portion 62A in the surrounding wall part 62 in front view, and the lower leg portion 68A of the knee airbag cover 6 is arranged to overlap on the virtual plane V2 extending in the vehicle width direction from the undersurface of the lower wall portion 62B in the surrounding wall part 62 in front view. The upper leg portion 67A and the lower leg portion 68A are fixed to the rear surface of the instrument panel 2 (lower panel 22). According to this structure, during driving of the vehicle, the knee airbag unit 4 and the knee airbag cover 6 are separated from each other to prevent abnormal noise that may occur if the engaging claws of the knee airbag unit 4 come into contact with the engagement holes of the knee airbag cover 6. When the knee airbag is deployed, the knee airbag cover 6 is pressed by the inflating knee airbag to engage the engagement holes of the knee airbag cover 6 with the engaging claws of the knee airbag unit 4. This can prevent displacement of the knee airbag cover 6 rearward in the vehicle. Moreover, the upper leg portion 67A and lower leg portion 68A can efficiently receive a reaction force (force directed frontward in the vehicle) applied to the knee airbag cover 6 when the engaging claws of the knee airbag unit 4 are engaged with the engagement holes of the knee airbag cover 6. Therefore, the knee airbag cover 6 can be more securely located at the predetermined position, and deterioration in the performance of the first to third parting portions P1 to P3 can be effectively reduced.

Furthermore, in the vehicle instrument panel structure 1 according to the present embodiment, the knee airbag unit 4 is attached to the knee airbag stays 33 of the steering support member 3 via the knee airbag brackets 5. The instrument panel 2 (lower panel 22) includes the opening 25 through which the knee airbag bracket 5 is inserted and the bridging portion 26 spanning the opening 25. In addition, the upper portion 52B and the lower portion 52C of the knee airbag bracket 5 are fixed to the knee airbag stay 33 such that the curved portion 52A of the knee airbag bracket 5 spans the bridging portion 26 of the instrument panel 2 in the vehicle vertical direction. In this structure, the opening 25 of the instrument panel 2 is necessary for fixing the knee airbag unit 4 to the knee airbag stays 33 disposed in the front side in the vehicle with respect to the instrument panel 2. Although the opening 25 formed on the instrument panel 2 may reduce rigidity around the opening 25, decrease in rigidity can be reduced by providing the bridging portion 26. Moreover, since the knee airbag bracket 5 includes the curved portion 52A, the knee airbag unit 4 and the knee airbag cover 6 or the like can be assembled after the instrument panel 2 is assembled to the steering support member 3. This can minimize decrease in assembly workability.

The embodiment of the present invention was described above. The present invention is not limited to the embodiment and can be modified and changed in various ways on the basis of the technical concept of the present invention.

For example, the foregoing embodiment described an example in which the bezel 8 is disposed in the upper side of the outer part in the vehicle width direction of the knee airbag cover 6 and on the upper side in the vehicle with respect to the column hole cover 7. The present invention is also effective for an instrument panel structure that is not provided with the bezel 8.

Furthermore, the foregoing embodiment described an example in which the engaging claws of the panel engaging portions 83 of the bezel 8 are engaged with the engagement holes of the bezel engaged portions 24 of the instrument panel 2 (lower panel 22), the bezel engaging portion 66 of the knee airbag cover 6 is engaged with the knee-airbag-cover engaged portion 84 of the bezel 8, the upper leg portions 67A and 67B and the lower leg portions 68A and 68B of the knee airbag cover 6 are fixed to the rear surface of the lower panel 22, and the engaging claws of the column hole cover 7 are engaged with the column-hole-cover engaged portions 85 of the bezel 8. However, the method for fixing the members of the instrument panel 2, the knee airbag cover 6, the column hole cover 7, and the bezel 8 is not limited to the example. The members can be fixed by any method according to, for example, the shapes of the members.

### [Reference Signs List]

- 1: Vehicle instrument panel structure
- 2: Instrument panel
- 21: Upper panel
- 22: Lower panel
- 23: Column hole
- 24: Bezel engaged portion
- 25: Opening
- 26: Bridging portion
- 3: Steering support member
- 31: First pipe
- 32: Second pipe
- 33: Knee airbag stay
- 34: Side bracket
- 35: Connecting member
- 36: Lower member
- 4: Knee airbag unit
- 5: Knee airbag bracket
- 51: Extending portion
- 52: Flange
- 52A: Curved portion
- 52B: Upper portion
- 52C: Lower portion
- 6: Knee airbag cover
- 6A: Design surface
- 61: Lid part
- 62: Surrounding wall part
- 62A: Upper wall portion
- 62B: Lower wall portion
- 62C, 62D: Side wall portion
- 63: Weak breaking part
- 64: Rib
- 65A: Outer wall portion
- 65B: Inner wall portion
- 66: Bezel engaging portion
- 66A: Engaging claw
- 66B: Positioning hole
- 67A, 67B: Upper leg portion
- 68A, 68B: Lower leg portion
- 7: Column hole cover
- 7A: Design surface
- 8: Bezel
- 8A: Design surface
- 81: Lower wall portion
- 82: Flange portion
- 83: Panel engaging portion
- 84: Knee-airbag-cover engaged portion
- 84A: Engagement hole
- 84B: Protrusion
- 85: Column-hole-cover engaged portion
- 9: Inside cover
- 9A: Design surface
- P1 to P3: First to third parting portions
- V1, V2: Virtual plane

## Claims

1. A vehicle instrument panel structure comprising:
an instrument panel that is disposed in front of a driver's seat of a vehicle and has a column hole formed to insert a steering column;
a knee airbag cover that is disposed at a rear side in the vehicle with respect to a knee airbag unit and covers a lower part of the column hole, the knee airbag unit being provided on the lower side in the vehicle with respect to the steering column and allowing an airbag to deploy below knees of a passenger seated on the driver's seat; and
a column hole cover that is disposed outside the knee airbag cover in a vehicle width direction,
**characterized in that** the knee airbag cover has a surrounding wall part that is formed to extend frontward in the vehicle from a front side surface opposed to the knee airbag unit and surround at least a rear end of the knee airbag unit, and
a first parting portion is located outside in the vehicle width direction relative to a side wall portion on an outer side in the vehicle width direction of the surrounding wall part and extends linearly in a vehicle vertical direction, the first parting portion being formed between a design surface of the knee airbag cover and a design surface of the column hole cover, the design surfaces facing the driver's seat.

2. The vehicle instrument panel structure according to claim 1, further comprising a bezel disposed in upper side in the vehicle with respect to the knee airbag cover and the column hole cover,
wherein a second parting portion is formed between a design surface of the bezel and the design surfaces of the knee airbag cover and the column hole cover, the design surface of the bezel facing the driver's seat,
the first parting portion has an upper end reaching the second parting portion,
the bezel includes:
a lower wall portion that protrudes frontward in the vehicle from a lower edge of the design surface and extends along the lower edge to form the second parting portion;
a flange portion that protrudes downwardly in the vehicle from a front edge of the lower wall portion and extends in the vehicle width direction along a rear surface of the instrument panel; and
panel engaging portions that are formed at least on both ends of the flange portion in the vehicle width direction and are engaged with a rear surface of the instrument panel, and
the knee airbag cover includes:
an outer wall portion that protrudes frontward in the vehicle from an outer edge of the design surface in the vehicle width direction and extends along the outer edge to form the first parting portion; and
a bezel engaging portion that is formed near an upper end portion of the outer wall portion and is engaged with the bezel,
the bezel engaging portion being disposed in front side in the vehicle with respect to the column hole cover.

3. The vehicle instrument panel structure according to claim 1, wherein the knee airbag cover includes:
an engagement hole that is formed in the surrounding wall part and is engageable with an engaging claw provided for the knee airbag unit;
an outer wall portion that protrudes frontward in the vehicle from the outer edge of the design surface of the knee airbag cover in the vehicle width direction and extends along the outer edge to form the first parting portion; and
an upper leg portion and a lower leg portion that extend outwardly in the vehicle width direction from the outer wall portion and are spaced in the vehicle vertical direction,
the upper leg portion is arranged to overlap on a virtual plane extending in the vehicle width direction from a top surface of an upper wall portion of the surrounding wall part in front view,
the lower leg portion is arranged to overlap on a virtual plane extending in the vehicle width direction from an undersurface of a lower wall portion of the surrounding wall part in front view, and
the upper leg portion and the lower leg portion are fixed to the rear surface of the instrument panel.

4. The vehicle instrument panel structure according to claim 1, wherein the knee airbag unit is attached to a stay of a steering support member via a knee air bag bracket, the steering support member supporting the steering column and the instrument panel,
the instrument panel includes:
an opening through which the knee airbag bracket is inserted; and
a bridging portion that spans in the vehicle width direction in a middle portion of the opening in the vehicle vertical direction and is fixed to the stay,
the knee airbag bracket has a curved portion in the middle portion in the vehicle vertical direction, the curved portion being formed toward rear side in the vehicle, and
the knee airbag bracket has an upper portion and a lower portion that are fixed to the stay such that the curved portion of the knee airbag bracket spans the bridging portion of the instrument panel in the vehicle vertical direction.
